# EUROPEAN PATENT SPECIFICATION

(11) **EP 1 486 412 B1**
(45) Date of publication and mention of the grant of the patent: **07.05.2014**
(21) Application number: 03425367.4
(22) Date of filing: 10.06.2003
(51) Int. Cl.: B62M 3/00, B62K 19/16

(54) **Bicycle pedal crank**
Fahrradtretkurbel
Pédalier de bicyclette

(43) Date of publication of application: 15.12.2004
(73) Proprietor: CAMPAGNOLO S.R.L., 36100 Vicenza (VI) (IT)
(72) Inventor: Dal Pra', Giuseppe, 36010 Zane' (Vi) (IT)
(74) Representative: Checcacci, Giorgio

(56) References cited:
- EP-A- 0 270 388
- WO-A1-98/57840
- DE-A- 19 755 950
- US-A- 5 435 869
- US-A1- 2003 061 900
- US-B1- 6 202 506
- US-B1- 6 443 033
- US-B1- 6 564 675

## Description

The present invention refers to a bicycle pedal crank particularly suitable for being used in the assembly of bicycle parts where substantial specific pressures are to be dealt with.

According to the prior art, different types of pedal crank can be identified with different shapes, materials and constructive techniques aimed at achieving the aim of reducing the weight as much as possible and at the same time ensuring, if not even improving, the characteristics of strength and reliability of the pedal crank.

The tendency towards the manufacturing of lighter pedal cranks has led to the use of composite materials having low specific weight.

Nevertheless, while the specific pressures occurring in the use of the pedal crank remain unaltered, specifically the torsion forces due to the thrusting action of the cyclist during pedalling, it becomes necessary to insert metal elements which act as an interface between the bottom bracket pivot, or pedal pivot, with the pedal crank body.

A first example which uses such a technique is shown in patent EP 1 281 609 of the same Applicant, wherein the pedal crank body is obtained by moulding a thermosetting composite material inside a mould in which metal inserts are arranged.

Another pedal crank in composite material with a metal insert is disclosed in EP 0 270 388 which is considered as the closest prior art for the subject-matter of claim 1.

During the moulding step, the composite material in plastic state is arranged to cover the inserts, coating them for most of their outer surface, except for a short portion in correspondence with support elements to which the inserts are fixed. Such support elements also advantageously act as extractor elements. The material thus arranged inside the mould is heated up to its hardening after which the pedal crank can be removed from the mould by activating the extractor elements. The pedal crank then undergoes cooling down to room temperature. In the end configuration the inserts are substantially incorporated inside the material with which the pedal crank body is made.

During the aforementioned cooling step there is, however, the drawback that the composite material which coats the insert tends to detach from the walls of the insert itself. During cooling, indeed, both the metal material of which the insert consists and the composite material of the pedal crank body shrink. The detachment process is all the more relevant the more different the cooling coefficient of the two materials is. Such a detachment means a decrease in adherence between the metal insert and the composite material, with a consequent decrease in the properties of strength and hold of the pedal crank as a whole.

A second solution which uses metal inserts in a pedal crank body of composite material is shown in patent US 6,202,506 B1. In such a solution the metal insert has, on the outer surface, a series of shaped discs which are spaced apart and incorporated in the composite material of which the pedal crank body is made. Such a manufacture, whilst increasing the contact surface between insert and composite material, it still has the drawback due to the partial detachment between the material of the pedal crank body and the insert, this being a phenomenon which appears during the hardening step of the material.

EP 0 270 388 discloses a pedal crank formed by the assembly of three separate elements, namely a crank arm made of composite material and two end pieces manufactured independently of metal, or other suitable material, and forming respectively the hub of the crank and a tip for receiving the corresponding pedal. The two end pieces each comprise a pin adapted to be fitted and fixed in the corresponding end of the crank arm.

A first aspect of the invention is a bicycle pedal crank according to claim 1.

Advantageously, the shape and size of the seat allow the insertion of the insert in the body of the component after such a seat has already been formed, in such a way avoiding the undesired effects of detachment due to the different shrinking of the materials in the hardening step.

Also disclosed herein is a not claimed method for making a bicycle component comprising a body consisting of structural fibres incorporated in a matrix of polymeric material and intended to couple mechanically with at least one element of the bicycle and to transmit force, said method being characterised in that it comprises the following steps:
- making the body of said component according to the desired shape;
- making, in said body, a seat of a size and shape such as to be able to receive an insert;
- making a metal insert of a size and shape such as to be able to be received in said seat;
- inserting said metal insert in said seat from the outside of said body.

The seat and the insert have matching coupling surfaces and a gluing substance is placed between them suitable for creating a suitable strong interface between the two parts.

Moreover, to reduce the shearing stress to a minimum, in the pedal crank, threadings are made between the insert and the seat.

According to the invention, indeed, the seat substantially consists of a mother screw and the insert is shaped like a screw to allow its easy insertion by screwing operation.

The method for obtaining the component, as stated, foresees a first step of making the body which is obtained through shaping in a mould.

In such a case, the making of the seat foresees the use of a master element coated with a detachment-enhancing substance, which is inserted in the mould before the material is inserted inside of it. After the shaping of the main body inside the mould has been completed, the master is removed from the body itself, also helped by the presence of the detachment-enhancing material.

To allow this last step, the master element consists of a removable element and preferably a screw-shaped element, which allows the subsequent insertion of an insert with a threaded profile.

Preferably the seat and the insert have zones with different profiles which define corresponding coupling zones without clearance and loose coupling zones in which a gap is advantageously defined to receive the gluing substance.

In a different example, the seat can advantageously be obtained through removal of material by mechanical machining.

Further characteristics and advantages of the invention shall become clearer from the description of some preferred embodiments, given with reference to the attached drawings where:
- fig. 1 represents an axonometric view of the pedal crank according to the invention;
- fig. 2 represents an exploded view of fig. 1;
- fig. 3 represents a partial section view of fig. 1 along the axis III°-III°;
- fig. 3A represents an enlarged detail of fig. 3;
- fig. 3B represents another enlarged detail of fig. 3;
- fig. 3C represents a variant embodiment of the detail of fig. 3A;
- figure 4 represents an exploded axonometric view of a not claimed variant of the component;
- figure 4A represents a partial section view along the axis IV°-IV° of fig. 4;
- fig. 4B represents an enlarged detail of fig. 4A;
- fig. 4C represents another enlarged detail of fig. 4A;
- figures 5 and 6 represent exploded axonometric views of further not claimed variants of the component;
- fig. 7 represents an axonometric view of another variant embodiment of the pedal crank of the invention;
- figures 8 to 11 represent the different steps for making the component of fig. 1;
- fig. 12 represents a view according to the section line XII-XII of fig. 9.

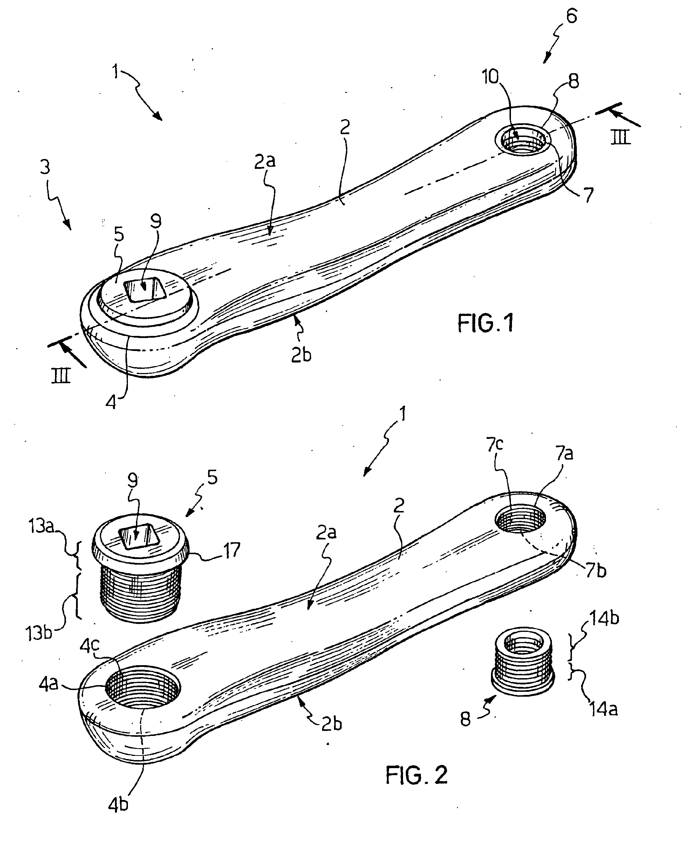

The pedal crank of the invention is represented in figures 1 to 3, where it is generally indicated with 1.

The pedal crank 1 consists of an elongated body 2 which has, at the end 3, a first seat 4 where a first metal insert 5 is received for the attachment of the pedal crank 1 to the bottom bracket pivot of the bicycle, not represented in the figures.

At the opposite end 6 there is a second seat 7 where a second metal insert 8 is received for the connection of a pedal, not represented in the figures.

The two inserts 5, 8 have respective through holes 9, 10 for the connection, respectively, to the bottom bracket pivot and to the pedal pivot. In this particular case, the through hole 9 is square for the connection to the bottom bracket pivot whereas the through hole 10 is threaded for the connection to the threaded pedal pivot. It is clear that in different embodiments the connection holes may not be through holes and may have a different geometric profile, matching the shape of the bottom bracket and pedal pivots.

The body 2 consists of structural fibres incorporated in a thermoplastic or thermosetting resin matrix, whereas the inserts 5, 8 consist of metal material and preferably an aluminium alloy. The structural fibres are preferably, but not necessarily, carbon fibres arranged in a random manner inside the matrix. Alternatively, the structural fibres can be arranged in an ordered way inside the mould, for example according to a unidirectional configuration or else wefted in the form of fabric, to create layers with desired characteristics along particular directions. The structural fibres can finally be chosen from the group comprising glass fibres, aramidic fibres, ceramic fibres or any combination thereof.

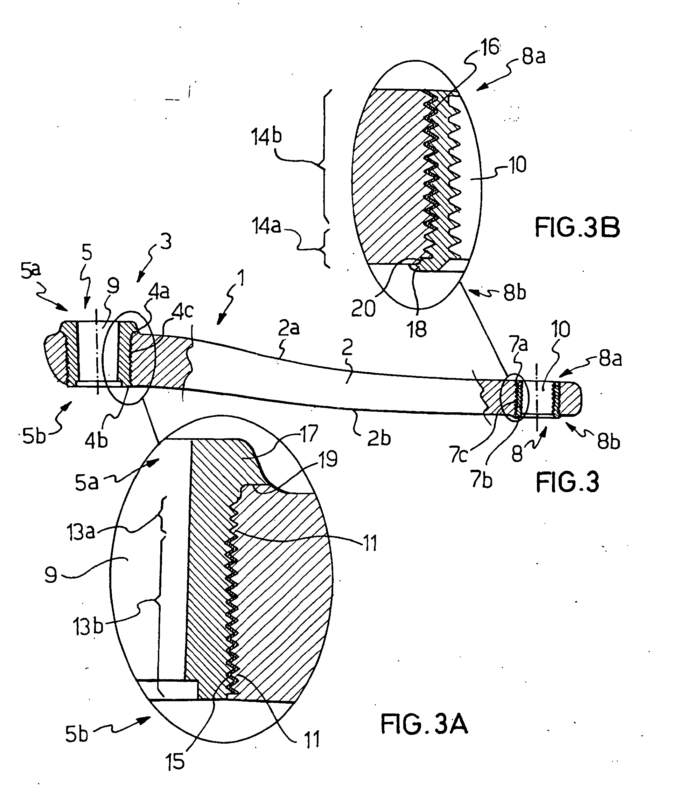

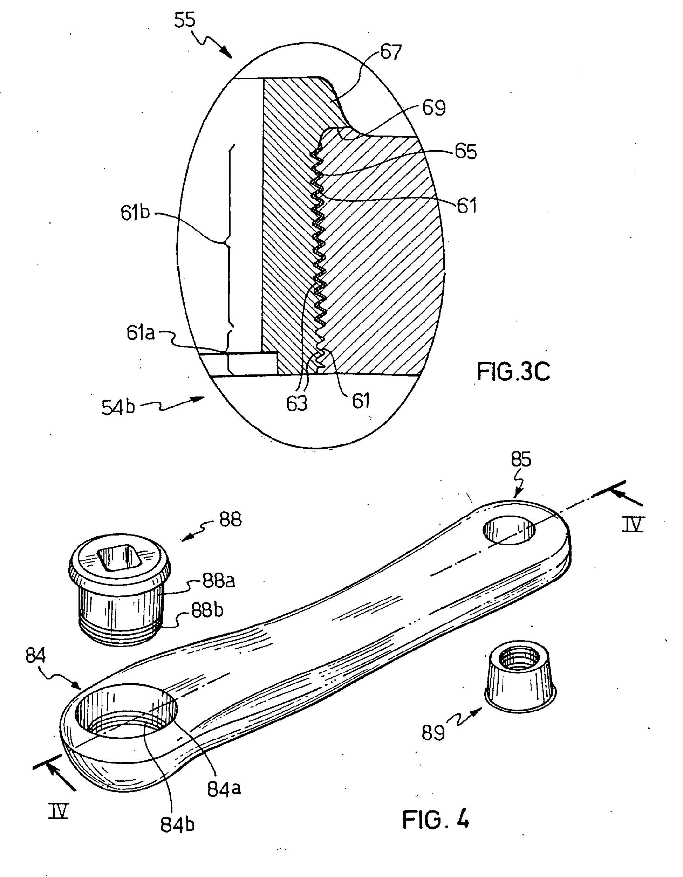

As can be seen in particular in figures 2, 3, 3A and 3B, each seat 4, 7 has a mouth 4a, 7b which opens onto the surface 2a, 2b of the body 2 of the pedal crank 1, a base 4b, 7a and walls 4c, 7c. The shape of such seats 4, 7 is substantially cylindrical therefore the size of the mouths 4a, 7b is substantially equal to the size of the respective bases 4b, 7a, whereas the walls 4c, 7c define, from the mouth 4a, 7b to the base 4b, 7a, identical circular sections. Each insert 5, 8 also has a substantially cylindrical shape matching the shape of the respective seats 4, 7.

The seat 4, 7 and the insert 5, 8 have matching coupling surfaces, on which respective threadings are formed. The seat 4, 7, indeed, consists of a mother screw 11, 12 whereas the insert 5, 8 has a portion thereof 13, 14 shaped like a screw.

As it can be seen in the detail of fig. 3A relative to the end 3 for connection to the bottom bracket pivot, the screw shaped portion 13 of the insert 5 has a first coupling zone 13a without clearance with the mother screw 11 and a second coupling zone 13b loose with the mother screw 11 to define, in such a way, an interspace zone 15. Such an interspace 15 has a substantially uniform thickness, advantageously between 0.1 and 0.05 mm, and is filled with gluing substance. The first coupling zone 13a without clearance in particular consists of three contact threads which have an average, outer and core diameter that are greater than those of the threads of the second zone 13b. Such a first zone 13a with the threads with increased diameter, is next to the end 5a of the insert 5 opposite the end 5b of first screwing of the insert 5 itself. The insert 5 also has a widened head portion 17 suitable for being arranged in abutment against the circular contact surface 19 formed in the main body 2. Finally, the square through hole 9 allows the coupling with the bottom bracket pivot.

What has been stated with reference to the end 3 for connection to the bottom bracket pivot, can be applied to the end 6 for connection of the pedal crank to the pedal pivot, as it can be seen in fig. 3B. The screw shaped portion 14 of the insert 8 has a first coupling zone 14a without clearance with the mother screw 12 and a second coupling zone 14b loose with the mother screw 12 to define, in such a way, an interspace zone 16. Such an interspace 16 has a substantially uniform thickness, advantageously between 0.1 and 0.05 mm, and is filled with gluing substance. The first coupling zone 14a without clearance in particular consists of three contact threads which have an average, outer and core diameter that are greater than those of the threads of the second zone 14b. Such a first zone 14a with the threads with increased diameter, is next to the end 8b of the insert 8 opposite to the end 8a of first screwing of the insert 8 itself. The insert 8 also has a widened head portion 18 suitable for being arranged in abutment against the circular contact surface 20 formed in the main body 2. Finally, the square through hole 10 allows the coupling with the pedal pivot.

It should be noted that the two inserts 5, 8 are screwed into the body 2 of the pedal crank 1 on its opposite surfaces 2a, 2b with anti-clockwise screwing. This determines, during pedalling, an advantageous twisting screwing action of the inserts 5, 8 into the respective seats 4, 7.

A variant embodiment of the screw-mother screw type coupling between insert and seat, is represented in fig. 3C. Such an embodiment differs from the previous one in that the mother screw 61 has a first coupling zone 61a without clearance with the screw portion 63 of the insert 55, and a second coupling zone 61b loose with the screw 63 to define an interspace 65. The first zone 61a consists of three contact threads which have an average, outer and core diameter that are smaller than those of the threads of the second zone 61b. The first zone 61a is placed near to the base 54b of the seat 54. Finally, the insert 55 has a widened head portion 67 suitable for being arranged in abutment against the circular contact surface 69 formed in the main body 2.

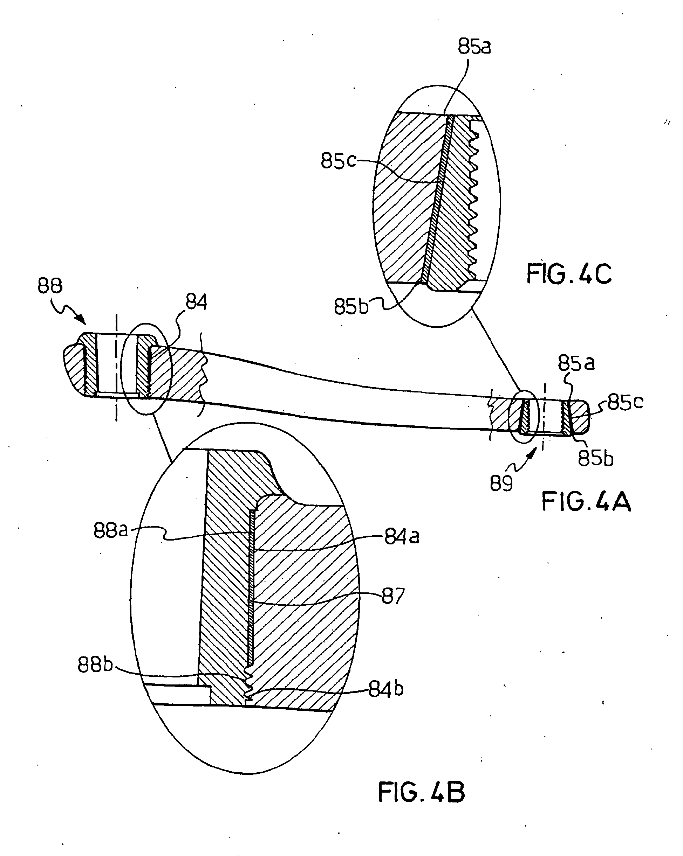

Figures 4, 5 and 6 represent not claimed variants of the pedal crank just described and differ from it in that the seat and the insert have different external profiles, which are still matching and equipped with an interspace for receiving gluing substances.

In fig. 4 a pedal crank is represented in which the insert 88 and the respective seat 84 associated with the central movement is different from the insert 89 and the respective seat 85 associated with the pedal.

As it can be seen in fig. 4B, the seat 84 has a first cylindrical portion 84a and a threaded end portion 84b. The associated insert 88, has a threaded portion 88b which couples with the threaded portion 84b of the seat 84 and a cylindrical portion 88a with a slightly smaller diameter than the diameter of the cylindrical portion 84a of the seat 84. This determines an interspace zone 87 where the gluing substance is advantageously received.

The seat 85 and the associated insert 89 have a slightly tapered cylindrical shape. As it can be seen in the detail of fig. 4C, the base 85a of the seat 85 is smaller in size than the mouth 85b, whereas the walls 85c define sections whose size decrease from the mouth 85b to the base 85a.

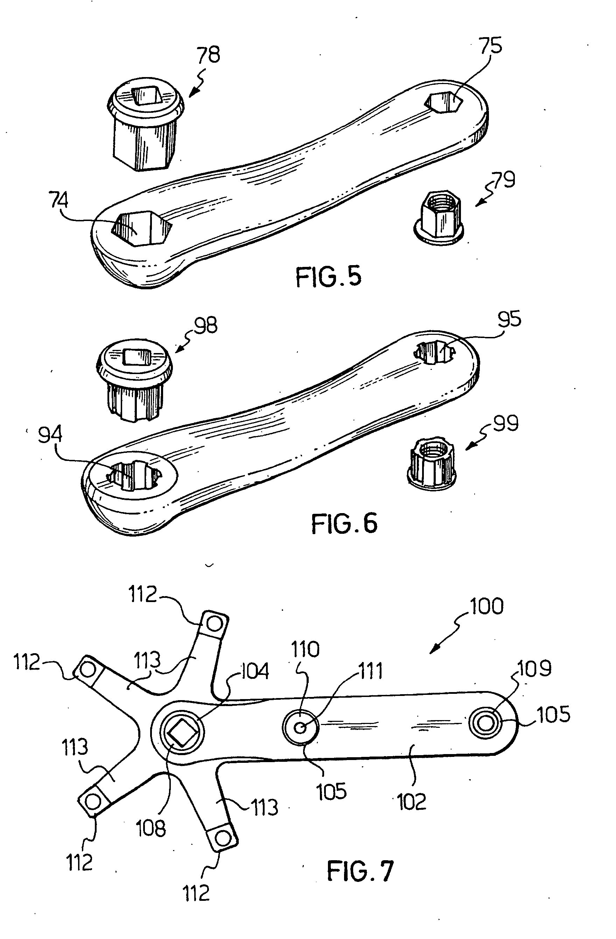

In fig. 5 a pedal crank is represented in which each seat 74, 75 and the associated insert 78, 79 have a substantially prismatic shape with a hexagonal section.

Finally, in fig. 6, a pedal crank is represented in which each seat 94, 95 and the associated insert 98, 99 have a substantially cylindrical shape with the contact surfaces grooved longitudinally to improve the hold under torsion of the insert 98, 99 with respect to the seat 94, 95.

It should be noted that the different geometry of the inserts and of the seats gives a different distribution of the forces, especially of the torsional type, during pedalling. This determines, in the design step, the sizing of the profiles so as to suitably distribute the mechanical stresses between the body of the pedal crank and the insert to reduce as much as possible the shearing stress to which the gluing substance placed between them is subjected.

Fig. 7 represents a variant of the pedal crank of fig. 1 and consists of a pedal crank with spokes 100, commonly known as right pedal crank, with which one or more crowns (not represented) are associated to entrain the chain.

In the solution shown, the pedal crank body 102 has, at one end, a first seat 104 where a first insert 108 is received for the connection to the central movement and, at the opposite end, a second seat 105 where a second insert 109 is received for the connection to a pedal. The first and second insert 108, 109 are preferably, but not necessarily, of the type described in fig. 1.

The pedal crank body 102 also comprises a third seat 115 and a third insert 110, of the same type as those described in the previous figures, arranged in an intermediate position between the first insert 108 and the second insert 109. The third seat 115 and the third insert 110 are used for the anchoring of the crown which is mounted integral to the pedal crank 100. For such a purpose a blind threaded hole 111, which allows screw attachment means of said crown, is formed on the third insert 110.

The pedal crank 100 also has, at one end, four arms 113, or spokes, at the ends of which respective seats 112 are formed which allow the locking of the crown in further four points, using screw attachment means. In the solution represented here the arms 113 and the pedal crank body 102 constitute a single body made of structural fibres incorporated in a matrix of polymeric material, for example a thermosetting or thermoplastic resin.

In a possible variant embodiment, the seats 112 can be of a size and shape such as to receive respective metal inserts, of the type described above, in such a case to define four anchoring points for the crown to the pedal crank body 102 with metal inserts.

In other variant examples which have neither been described nor represented, the pedal crank could be equipped with seats with different geometries, for example any combination of the shapes shown in figures 4 to 6.

In other cases the insert itself could be of a different shape with respect to the seat in which it is received, for example providing a triangular shaped prismatic insert received in any non-cylindrical shaped seat.

In another variant, the insert-seat coupling could be made without the interposition of gluing substance, in such a case the hold being ensured only by the mechanical interference between the two parts. Furthermore, the seat could be blind and not engage the body for its entire length like for the shapes illustrated above.

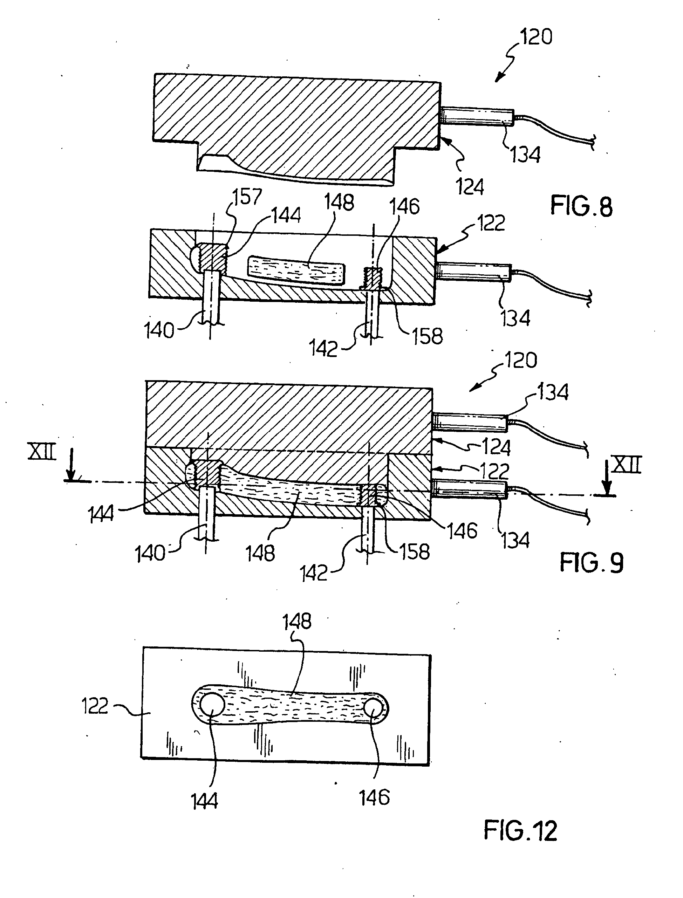

With reference to figures 8 to 11, the steps for obtaining a pedal crank of the type described and represented in fig. 1, are illustrated hereafter.

As it can be seen in fig. 8, a predetermined amount of polymeric material incorporating structural fibres 148 is arranged inside a first half 122 of a mould 120. Inside such a first half 122 two master elements 144, 146 are also positioned, coated with a detachment-enhancing substance and kept in position by two support elements 140, 142, which also advantageously act as extractor elements. The master elements 144, 146 consist of respective threaded inserts equipped with a widened head 157, 158 the profile of which conjugately mirrors the shape of the seats 4, 5 to be obtained in the pedal crank 1.

In the subsequent step the second half 124 of the mould 120 is closed on the first half 122, making the material 148 flow inside the recess defined by the two halves 122, 124 of the mould 120. The material 148 in plastic state completely fills the cavity and completely surrounds the master elements 144, 146, as it can be seen in fig. 12, with the exception of the widened heads 157, 158 which, therefore, are not coated with any material.

The subsequent heating of the mould 120, through suitable known heating means 134, allows the hardening and the reticulation of the polymeric material and the relative shaping of the pedal crank body 2 according to the desired shape.

The mould 120 is then opened and the pedal crank body 2 is removed activating the extractor elements 140, 142. The master elements 144, 146, as stated, have the widened heads 157, 158 not coated with material. This allows their subsequent removal from the pedal crank body 2 through an unscrewing operation. Such an operation is promoted by the presence of the detachment-enhancing material with which the master elements 144, 146 had been coated before moulding as well as by a partial detachment of the material 148 due to the heat shrinking of the materials in the cooling step. The removal of the master elements 144, 146 creates a semi-worked product consisting of a pedal crank body 2, made totally from set material formed from structural fibres, with two threaded seats 4, 5.

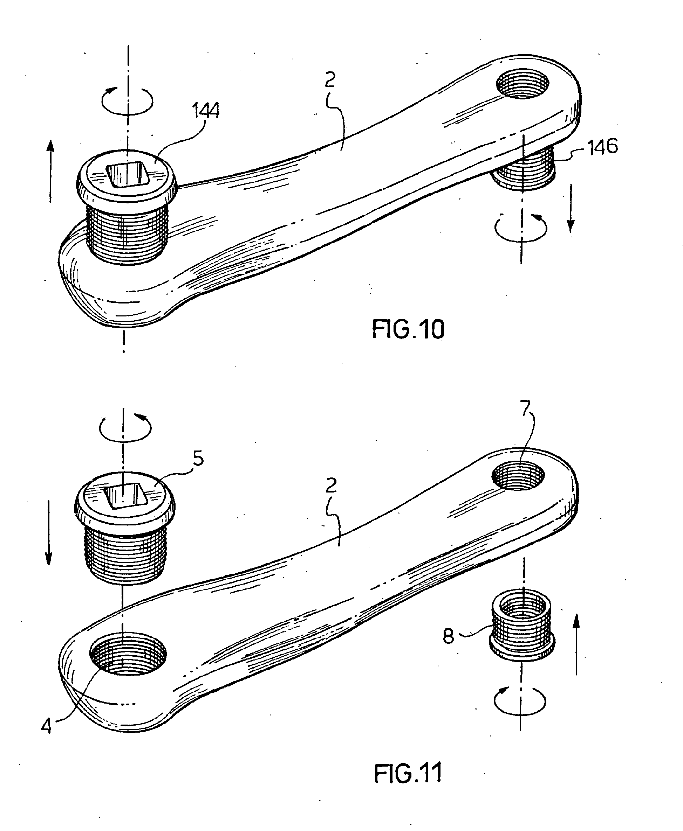

The subsequent operation, shown in fig. 11, provides the insertion of the respective threaded inserts 5, 8, having the geometry according to what is shown in fig. 3A and fig. 3B, coated with a layer of gluing substance, preferably a bicomponent epoxy resin. During screwing, the gluing substance is arranged to fill the interspace 15, 16 defined between the seat 4, 7 and the insert 5, 8. The end screwing step finally allows the locking of the insert 5, 8 in the seat 4, 7 thanks to the coupling without clearance made by the contact threads 13a, 14a with the mother screw 11, 12.

Then follows a drying step of the gluing substance, which can take place at room temperature or possibly through heating, until it polymerises.

Finally, suitable holes 9, 10 for connection to the bottom bracket pivot and to the pedal are made on the inserts 5, 8 according to known processing techniques with machine tools.

Advantageously, the described method allows the cohesion force between the inserts and the pedal crank body to be improved thanks to their particular geometry. These are, indeed, inserted in the seats when they are already formed, with the polymeric material already reticulated and hardened, allowing an ideal coupling by mechanical interference.

Even more advantageously, the described method allows the cohesion force between the inserts and the pedal crank body to be improved by exploiting as far as possible the adhesive properties of the gluing substance. This, indeed, is applied and left to dry when the pedal crank body and the inserts are already formed therefore they do not undergo any shrinkage during the polymerisation step of the gluing substance.

Variants of such a method foresee the use of different shaped master elements, i.e. shaped so as to allow the manufacture of the respective seats according to the desired geometries. For the manufacture, for example, of the seat 61 represented in fig. 3B, the master element can consist of a cylindrical element with variable profile threading according to the profile shown in such a figure.

It can also be foreseen that in a further step of the described method, after the insert is inserted in the respective seat, the end opposite the widened head undergoes a drawing operation to create an undercut zone which prevents the insert from coming out from the seat itself.

In another variant of the described method, the seats could be formed by processing with machine tools starting from a monolithic pedal crank body obtained, for example, through moulding with the described method, in which, however, the master elements are missing.

In a further variant the moulding could foresee the use of layers of material suitably arranged inside the mould for shaping the pedal crank. Such layers can consist of structural fibres arranged according to a unidirectional configuration, or else wefted in the form of fabric, inside the matrix of polymeric material. This allows particular physical-mechanical characteristics of the pedal crank to be obtained along predetermined directions.

It should be noted that the shape of the master elements substantially mirrors the shape of the inserts and is slightly larger than them in at least one portion to allow, when the insertion is completed, the creation of the interspace for receiving the gluing substance.

Moreover, when the pedal crank is mounted on the bicycle, it can be foreseen to apply a removable covering element of the insert to improve the appearance of the pedal crank.

## Claims

1. Bicycle pedal crank (1; 100) comprising a body (2; 102) consisting of structural fibres incorporated in a matrix of polymeric material and intended to mechanically couple with at least one element of the bicycle and to transmit force, the pedal crank (1; 100) having at one end (3) a first and at the opposite end (6) a second seat (4, 7; 54; 84, 85; 104, 105) formed in the body (2; 102), each having a mouth (4a, 7b; 54a; 84a; 85b) open to an outer surface thereof (2a; 2b), a base (4b, 7a; 54b; 84b, 85a) of a size not greater than the size of said mouth (4a, 7b; 54a; 84a; 85b) and a wall (4c, 7c; 85c) defining sections the size of which are not increasing from the mouth (4a, 7b; 54a; 84a; 85b) to the base (4b, 7a; 54b; 84b, 85a) and a first and a second metal insert (5, 8; 55; 88, 89; 108, 109), said first metal insert (5; 55; 88; 108) having a connection hole (9) to a bottom bracket pivot and said second metal insert (8; 89; 109) having a connection hole (10) to a pedal pivot of the bicycle, wherein said first and second metal inserts (5, 8; 55; 88, 89; 108, 109) are received in respective said first and second seats (4, 7; 54; 84, 85; 104, 105) such that the connection holes (9, 10) are substantially surrounded by the composite material of which the pedal crank body is made;
wherein
a gluing substance is placed between said first and second seats (4, 7; 54; 84, 85; 104, 105) and said first and second metal inserts (5, 8; 55; 88, 89; 108, 109) and said first and second metal inserts (5, 8; 55; 88, 89; 108, 109) each have a widened head portion (17, 18; 67) suitable for being arranged in abutment against a circular contact surface (19, 20; 69) formed in said outer surface (2a, 2b) of said body (2);
the pedal crank being **characterized in that**
- said first and second seats (4, 7; 54; 84, 85; 104, 105) and said first and second metal inserts (5, 8; 55; 88, 89; 108, 109) have matching coupling surfaces such as to make a mechanical coupling;
- said first and second seats (4, 7; 54; 74, 75; 84, 85; 94, 95; 104, 105) and said first and second metal inserts (5, 8; 55; 78, 79; 88, 89; 98, 99; 108, 109), at said coupling surfaces, are cylindrical shaped;
wherein
said coupling surface of said first and second seats (4, 7; 54; 84) has, in at least one portion thereof, an inner threading defining a mother screw (11, 61; 84b) in said portion and said coupling surface of said first and second metal inserts (5, 8; 55; 88) has, in at least one portion thereof (13a, 14a; 63; 88b), an outer threading defining a screw on said portion; and
said walls (4c, 7c; 85c) of said first and second seats (4, 7; 54; 84, 85; 104, 105) and the outer surface of said first and second metal inserts (5, 8; 55; 88, 89; 108, 109) define an interspace (15, 16; 65; 87) suitable for receiving said gluing substance.

2. Pedal crank (1; 100) according to claim 1, **characterised in that** said threaded portions (84b, 88b) are defined on the base of said first seat (84) and on the end part of said first insert (88).

3. Pedal crank (1; 100) according to claim 1, **characterised in that** all of the coupling surfaces are threaded.

4. Pedal crank (1; 100) according to claim 1, **characterised in that** said portion of said screw shaped first and second metal inserts (5, 8) has a first coupling zone (13a, 14a) without clearance with said mother screw (11) and a second coupling zone (13b, 14b) loose with said mother screw (11) to define the interspace (15, 16).

5. Pedal crank (1; 100) according to claim 4, **characterised in that** said first zone (13a, 14a) comprises one or more contact threads having a greater average, outer and core diameter with respect to the threads of said second zone (13b, 14b).

6. Pedal crank (1; 100) according to claim 4, **characterised in that** said first zone (13a, 14a) is placed near to the end (5a, 8b) of said first and second metal inserts (5, 8) arranged in an opposite position to the end (5b, 8a) of said first and second metal inserts (5, 8).

7. Pedal crank (1; 100) according to claim 1, **characterised in that** said portion (61) of said mother screw shaped seat has a first coupling zone (61a) without clearance with said screw portion (63) and a second coupling zone (61b) loose with said (63) screw portion to define the interspace (65).

8. Pedal crank (1; 100) according to claim 7, **characterised in that** said first zone (61a) comprises one or more contact threads having an average, outer and core diameter smaller than the threads of said second zone (61b).

9. Pedal crank (1; 100) according to claim 7, **characterised in that** said first zone (61a) is placed near to the base (54b) of said first seat (54).

10. Pedal crank (1; 100) according to claim 1, **characterised in that** said base (4b, 8a; 54b) of said first and second seats (4, 7; 54) opens onto the outer surface (2b, 2a) of said pedal crank (1) defining a through configuration for said first and second seats (4, 7; 54; 84, 85; 104, 105).

11. Pedal crank according to claim 1, **characterised in that** said base of said first and second seats is confined to the inside of the body of said pedal crank defining a blind configuration for said first and second seats.

12. Pedal crank according to claim 10, **characterised in that** said first and second metal inserts have a second widened head portion suitable for being arranged in abutment against said second outer surface.

13. Pedal crank according to claim 1, **characterised in that** it comprises a removable covering element which can be applied above said first and second metal inserts.

14. Pedal crank (1; 100) according to claim 1, **characterised in that** said interspace (15, 16; 65; 87) has a substantially uniform thickness.

15. Pedal crank (1; 100) according to claim 14, **characterised in that** said thickness is between 0.1 and 0.05 mm.

16. Pedal crank (1; 100) according to claim 1, **characterised in that** said structural fibres are randomly arranged inside said matrix of polymeric material.

17. Pedal crank according to claim 1, **characterised in that** said structural fibres are arranged in an ordered manner inside said matrix of polymeric material.

18. Pedal crank (1; 100) according to claim 1, **characterised in that** said structural fibres can be chosen from the group comprising: carbon fibres, glass fibres, aramidic fibres, ceramic fibres or any combination thereof.

19. Pedal crank (1; 100) according to claim 1, **characterised in that** said first and second metal inserts (5, 8; 55; 88, 89; 108, 109) consist of a light alloy.

20. Pedal crank (1; 100) according to claim 19, **characterised in that** said light alloy is aluminium.

21. Pedal crank (1; 100) according to claim 1, **characterised in that** said gluing substance consists of a bicomponent epoxy resin.

22. Pedal crank (100) according to claim 1, **characterised in that** said pedal crank (1) comprises a third seat (115) and a third insert (110) for the anchoring of a crown associated with said pedal crank (1).

23. Pedal crank (100) according to claim 22, **characterised in that** said third insert (110) is arranged in an intermediate position between said first insert (108) and said second insert (109).

24. Pedal crank (100) according to claim 1, **characterised in that** said pedal crank (1) comprises one or more arms (113) which extend radially with respect to said first seat (104) suitable for allowing the anchoring of a crown associated with said pedal crank (1).

25. Pedal crank (100) according to claim 24, **characterised in that** said arms (113) comprise seats (112) and inserts for the anchoring of said crown.

## Patentansprüche

1. Fahrrad-Pedalkurbel (1; 100), die einen Körper (2; 102) umfasst, der aus Strukturfasern besteht, die in eine Matrix aus Polymermaterial integriert sind, und der zum mechanischen Koppeln in mit wenigstens einem Element des Fahrrades sowie zum Übertragen von Kraft bestimmt ist, wobei die Pedalkurbel (1; 100) an einem Ende (3) eine erste und am gegenüberliegenden Ende (6) eine zweite Aufnahme (4, 7; 54; 84, 85; 104, 105) aufweist, die in dem Körper (2; 102) ausgebildet sind, und die jeweils eine Öffnung (4a, 7b; 54a; 84a, 85b), die sich zu einer Außenfläche desselben öffnet, eine Basis (4b, 7a; 54b; 84b, 85a) einer Abmessung, die nicht größer ist als die Abmessung der Öffnung (4a, 7b; 54a; 84a, 85b), sowie eine Wand (4c, 7c; 85c) aufweisen, die Abschnitte bildet, deren Abmessung von der Öffnung (4a, 7b; 54a; 84a, 85b) zu der Basis (4b, 7a; 54b; 84b, 85a) nicht zunimmt, und einen ersten sowie einen zweiten Metalleinsatz (5, 8; 55; 88, 89; 109, 109), wobei der erste Metalleinsatz (5; 55; 88; 108) ein Verbindungsloch (9) zu einer Tretlager-Drehachse hat und der zweite Metalleinsatz (8; 89; 109) ein Verbindungsloch (10) zu einer Pedal-Drehachse des Fahrrades hat, und der erste sowie der zweite Metalleinsatz (5, 8; 55; 88, 89; 108, 109) in der ersten bzw. der zweiten Aufnahme (4, 7; 54; 84, 85; 104, 105) so aufgenommen sind, dass die Verbindungslöcher (9, 10) im Wesentlichen von dem Verbundmaterial umgeben sind, aus dem der Körper der Pedalkurbel besteht;
wobei
sich eine Klebesubstanz zwischen der ersten sowie der zweiten Aufnahme (4, 7; 54; 84, 85; 104, 105) und dem ersten sowie dem zweiten Metalleinsatz (5, 8; 55; 88, 89; 108, 109) befindet und der erste sowie der zweite Metalleinsatz (5, 8; 55; 88, 89; 108, 109) jeweils einen aufgeweiteten Kopfabschnitt (17, 18; 67) aufweisen, der sich dazu eignet, ihn an einer kreisförmigen Kontaktfläche (19, 20; 69) anliegend anzuordnen, die in der Außenfläche (2a, 2b) des Körpers (2) ausgebildet ist;
und die Pedalkurbel **dadurch gekennzeichnet ist, dass**
die erste und die zweite Aufnahme (4, 7; 54; 84, 85; 104, 105) sowie der erste und der zweite Metalleinsatz (5, 8; 55; 88, 89; 108, 109) passende Kopplungsflächen zum Herstellen einer mechanischen Kopplung aufweisen;
die erste sowie die zweite Aufnahme (4, 7; 54; 84, 85; 104, 105) und der erste sowie der zweite Metalleinsatz (5, 8; 55; 88, 89; 108, 109) an den Kopplungsflächen zylindrisch geformt sind;
wobei
die Kopplungsfläche der ersten und der zweiten Aufnahme (4, 7; 54; 84) in wenigstens einem Abschnitt derselben einen Innengewindegang aufweist, der ein Innengewinde (11, 61; 84b) in dem Abschnitt bildet, und die Kopplungsfläche des ersten sowie des zweiten Metalleinsatzes (5, 8; 55; 88) in wenigstens einem Abschnitt (13a, 14a; 63; 63b) derselben einen Außengewindegang aufweist, der ein Gewinde an dem Abschnitt bildet; und
die Wände (4c, 7c; 85c) der ersten sowie der zweiten Aufnahme (4, 7; 54; 84, 85; 104, 105) und die Außenfläche des ersten sowie des zweiten Metalleinsatzes (5, 8; 55; 88, 89; 108, 109) einen Zwischenraum (15, 16; 65; 87) bilden, der zum Aufnehmen der Klebesubstanz geeignet ist.

2. Pedalkurbel (1; 100) nach Anspruch 1, **dadurch gekennzeichnet, dass** die Gewindeabschnitte (84b, 88b) an der Basis der ersten Aufnahme (84) und an dem Endteil des ersten Einsatzes (88) ausgebildet sind.

3. Pedalkurbel (1; 100) nach Anspruch 1, **dadurch gekennzeichnet, dass** alle der Kopplungsflächen mit Gewinde versehen sind.

4. Pedalkurbel (1; 100) nach Anspruch 1, **dadurch gekennzeichnet, dass** der Abschnitt des schraubenförmigen ersten und zweiten Metalleinsatzes (5, 8) eine erste Kopplungszone (13a, 14a) ohne Spiel mit dem Innengewinde (11) sowie eine zweite Kopplungszone (13b, 14b) aufweist, die locker mit dem Innengewinde (11) verbunden ist und den Zwischenraum (15, 16) bildet.

5. Pedalkurbel (1; 100) nach Anspruch 4, **dadurch gekennzeichnet, dass** die erste Zone (13a, 14a) einen oder mehrere Kontakt-Gewindegang/-gänge umfasst, der/die einen größeren durchschnittlichen Außen- und Kerndurchmesser in Bezug auf die Gewindegänge der zweiten Zone (13b, 14b) hat/haben.

6. Pedalkurbel (1; 100) nach Anspruch 4, **dadurch gekennzeichnet, dass** sich die erste Zone (13a, 14a) nahe an dem Ende (5a, 8b) des ersten und zweiten Metalleinsatzes (5, 8) befindet und an einer dem Ende (5b, 8a) des ersten und des zweiten Metalleinsatzes (5, 8) gegenüberliegenden Position angeordnet ist.

7. Pedalkurbel (1; 100) nach Anspruch 1, **dadurch gekennzeichnet, dass** der Abschnitt (61) der innengewindeförmigen Aufnahme eine erste Kopplungszone (61 a) ohne Spiel mit dem Gewindeabschnitt (63) und eine zweite Kopplungszone (61 b) aufweist, die lose mit dem Gewindeabschnitt (63) verbunden ist und den Zwischenraum (65) bildet.

8. Pedalkurbel (1; 100) nach Anspruch 7, **dadurch gekennzeichnet, dass** die erste Zone (61a) einen oder mehrere Kontakt-Gewindegang/-gänge umfasst, der/die einen durchschnittlichen Außen- und Kerndurchmesser hat/haben, der kleiner ist als die Gewindegänge der zweiten Zone (61 b).

9. Pedalkurbel (1; 100) nach Anspruch 7, **dadurch gekennzeichnet, dass** sich die erste Zone (61 a) in der Nähe der Basis (54b) der ersten Aufnahme (54) befindet.

10. Pedalkurbel (1; 100) nach Anspruch 1, **dadurch gekennzeichnet, dass** sich die Basis (4b, 8a; 54b) der ersten und der zweiten Aufnahme (4, 7; 54) zu der Außenfläche (2b, 2a) der Pedalkurbel (1) öffnet und eine Durchgangsstruktur für die erste und die zweite Aufnahme (4, 7; 54; 84, 85; 104, 105) bildet.

11. Pedalkurbel nach Anspruch 1, **dadurch gekennzeichnet, dass** die Basis der ersten und der zweiten Aufnahme auf die Innenseite des Körpers der Pedalkurbel beschränkt ist und eine Blindstruktur für die erste und die zweite Aufnahme bildet.

12. Pedalkurbel nach Anspruch 10, **dadurch gekennzeichnet, dass** der erste und der zweite Metalleinsatz einen zweiten aufgeweiteten Kopfabschnitt aufweisen, der sich dazu eignet, ihn an der zweiten Außenfläche anliegend anzuordnen.

13. Pedalkurbel nach Anspruch 1, **dadurch gekennzeichnet, dass** sie ein abnehmbares Abdeckelement umfasst, das über dem ersten und dem zweiten Metalleinsatz aufgebracht werden kann.

14. Pedalkurbel (1; 100) nach Anspruch 1, **dadurch gekennzeichnet, dass** der Zwischenraum (15, 16; 65; 87) eine im Wesentlichen einheitliche Dicke hat.

15. Pedalkurbel (1; 100) nach Anspruch 14, **dadurch gekennzeichnet, dass** die Dicke zwischen 0,1 und 0,05 mm beträgt.

16. Pedalkurbel (1; 100) nach Anspruch 1, **dadurch gekennzeichnet, dass** die Strukturfasern ungeordnet im Inneren der Matrix aus Polymermaterial angeordnet sind.

17. Pedalkurbel nach Anspruch 1, **dadurch gekennzeichnet, dass** die Strukturfasern geordnet im Inneren der Matrix aus Polymermaterial angeordnet sind.

18. Pedalkurbel (1; 100) nach Anspruch 1, **dadurch gekennzeichnet, dass** die Strukturfasern aus der Gruppe ausgewählt werden können, die Kohlefasern, Glasfasern, Aramidfasern, Keramikfasern oder jede beliebige Kombination derselben umfasst.

19. Pedalkurbel (1; 100) nach Anspruch 1, **dadurch gekennzeichnet, dass** der erste und der zweite Metalleinsatz (5, 8; 55; 88, 89; 108, 109) aus einer Leichtmetalllegierung bestehen.

20. Pedalkurbel (1; 100) nach Anspruch 19, **dadurch gekennzeichnet, dass** die Leichtmetalllegierung Aluminium ist.

21. Pedalkurbel (1; 100) nach Anspruch 1, **dadurch gekennzeichnet, dass** die Klebesubstanz aus einem Zweikomponenten-Epoxidharz besteht.

22. Pedalkurbel (100) nach Anspruch 1, **dadurch gekennzeichnet, dass** die Pedalkurbel (1) eine dritte Aufnahme (115) und einen dritten Einsatz (110) für die Verankerung eines mit der Pedalkurbel (1) verbundenen Kettenblatts umfasst.

23. Pedalkurbel (100) nach Anspruch 22, **dadurch gekennzeichnet, dass** der dritte Einsatz (110) an einer Zwischenposition zwischen dem ersten Einsatz (108) und dem zweiten Einsatz (109) angeordnet ist.

24. Pedalkurbel (100) nach Anspruch 1, **dadurch gekennzeichnet, dass** die Pedalkurbel (1) einen oder mehrere Arm/e (113) umfasst, der/die sich radial in Bezug auf die erste Aufnahme (104) erstreckt/erstrecken und der/die dazu geeignet ist/sind, die Verankerung eines mit der Pedalkurbel (1) verbundenen Kettenblatts zu ermöglicht.

25. Pedalkurbel (100) nach Anspruch 24, **dadurch gekennzeichnet, dass** die Arme (113) Aufnahmen (112) und Einsätze zum Verankern des Kettenblatts umfassen.

## Revendications

1. Manivelle de pédale de bicyclette (1 ; 100) comprenant un corps (2 ; 102) constitué de fibres structurelles incorporées dans une matrice d'un matériau polymère et destinée à être couplée mécaniquement avec au moins un élément de la bicyclette et à transmettre une force, la manivelle de pédale (1 ; 100) ayant à une première extrémité (3) un premier logement et à l'extrémité opposée (6) un deuxième logement (4, 7 ; 54 ; 84, 85 ; 104, 105) formés dans le corps (2 ; 102), chacun ayant une ouverture (4a, 7b ; 54a ; 84a ; 85b) ouverte vers une surface extérieure de celui-ci (2a ; 2b), une base (4b, 7a ; 54b ; 84b, 85a) d'une taille pas supérieure à la taille de ladite ouverture (4a, 7b ; 54a ; 84a ; 85b) et une paroi (4c, 7c ; 85c) définissant des sections dont la taille n'augmente pas de l'ouverture (4a, 7b ; 54a ; 84a ; 85b) à la base (4b, 7a ; 54b ; 84b, 85a) et des première et deuxième pièces rapportées métalliques (5, 8 ; 55 ; 88, 89 ; 108, 109), ladite première pièce rapportée métallique (5 ; 55 ; 88 ; 108) ayant un trou de connexion (9) vers un pivot de pédalier et ladite deuxième pièce rapportée métallique (8 ; 89 ; 109) ayant un trou de connexion (10) vers un pivot de pédale de la bicyclette, dans laquelle lesdites première et deuxième pièces rapportées métalliques (5, 8 ; 55 ; 88, 89 ; 108, 109) sont reçues dans lesdits premier et deuxième logements respectifs (4, 7 ; 54 ; 84, 85 ; 104, 105) de sorte que les trous de connexion (9, 10) soient globalement entourés par le matériau composite dont est fait le corps de manivelle de pédale,
dans laquelle
une substance collante est placée entre lesdits premier et deuxième logements (4, 7 ; 54 ; 84, 85 ; 104, 105) et lesdites première et deuxième pièces rapportées métalliques (5, 8 ; 55 ; 88, 89 ; 108, 109) et lesdites première et deuxième pièces rapportées métalliques (5, 8 ; 55 ; 88, 89 ; 108, 109) ont chacune une partie de tête élargie (17, 18 ; 67) appropriée pour être placée en butée contre une surface de contact circulaire (19, 20 ; 69) formée dans ladite surface extérieure (2a, 2b) dudit corps (2),
la manivelle de pédale étant **caractérisée en ce que**
- lesdits premier et deuxième logements (4, 7 ; 54 ; 84, 85 ; 104, 105) et lesdites première et deuxième pièces rapportées métalliques (5, 8 ; 55 ; 88, 89 ; 108, 109) ont des surfaces de couplage correspondantes de manière à réaliser un couplage mécanique,
- lesdits premier et deuxième logements (4, 7 ; 54 ; 74, 75 ; 84, 85 ; 94, 95 ; 104, 105) et lesdites première et deuxième pièces rapportées métalliques (5, 8 ; 55 ; 78, 79 ; 88, 89 ; 98, 99 ; 108, 109), au niveau desdites surfaces de couplage, sont de forme cylindrique,
dans laquelle
ladite surface de couplage desdits premier et deuxième logements (4, 7 ; 54 ; 84) a, dans au moins une partie de celle-ci, un filetage intérieur définissant une vis mère (11, 61 ; 84b) dans ladite partie et ladite surface de couplage desdites première et deuxième pièces rapportées métalliques (5, 8 ; 55 ; 88) a, dans au moins une partie de celle-ci (13a, 14a ; 63 ; 88b), un filetage extérieur définissant une vis_(11, 61 ; 84b) sur ladite partie, et
lesdites parois (4c, 7c ; 85c) desdits premier et deuxième logements (4, 7 ; 54 ; 84, 85 ; 104, 105) et la surface extérieure desdites première et deuxième pièces rapportées métalliques (5, 8 ; 55 ; 88, 89 ; 108, 109) définissent un espacement (15, 16 ; 65 ; 87) approprié pour recevoir ladite substance collante.

2. Manivelle de pédale (1 ; 100) selon la revendication 1, **caractérisée en ce que** lesdites parties filetées (84b, 88b) sont définies sur la base dudit premier logement (84) et sur la partie d'extrémité de ladite première pièce rapportée (88).

3. Manivelle de pédale (1 ; 100) selon la revendication 1, **caractérisée en ce que** la totalité des surfaces de couplage sont filetées.

4. Manivelle de pédale (1 ; 100) selon la revendication 1, **caractérisée en ce que** ladite partie desdites première et deuxième pièces rapportées métalliques en forme de vis (5, 8) possède une première zone de couplage (13a, 14a) sans jeu avec ladite vis mère (11) et une deuxième zone de couplage (13b, 14b) lâche par rapport à ladite vis mère (11) pour définir l'espacement (15, 16).

5. Manivelle de pédale (1 ; 100) selon la revendication 4, **caractérisée en ce que** ladite première zone (13a, 14a) comprend un ou plusieurs filets de contact ayant un diamètre moyen, un diamètre extérieur et un diamètre central plus grands par rapport aux filets de ladite deuxième zone (13b, 14b).

6. Manivelle de pédale (1 ; 100) selon la revendication 4, **caractérisée en ce que** ladite première zone (13a, 14a) est placée à proximité de l'extrémité (5a, 8b) desdites première et deuxième pièces rapportées métalliques (5, 8) disposées dans une position opposée par rapport à l'extrémité (5b, 8a) desdites première et deuxième pièces rapportées métalliques (5, 8).

7. Manivelle de pédale (1 ; 100) selon la revendication 1, **caractérisée en ce que** ladite partie (61) dudit logement en forme de vis mère a une première zone de couplage (61a) sans jeu par rapport à ladite partie de vis (63) et une deuxième zone de couplage (61b) lâche par rapport à ladite partie de vis (63) pour définir l'espacement (65).

8. Manivelle de pédale (1 ; 100) selon la revendication 7, **caractérisée en ce que** ladite première zone (61a) comprend un ou plusieurs filets de contact ayant un diamètre moyen, un diamètre extérieur et un diamètre central plus petits par rapport aux filets de ladite deuxième zone (61b).

9. Manivelle de pédale (1 ; 100) selon la revendication 7, **caractérisée en ce que** ladite première zone (61a) est placée à proximité de la base (54b) dudit premier logement (54).

10. Manivelle de pédale (1 ; 100) selon la revendication 1, **caractérisée en ce que** ladite base (4b, 8a ; 54b) desdits premier et deuxième logements (4, 7 ; 54) s'ouvre sur la surface extérieure (2b, 2a) de ladite manivelle de pédale (1) en définissant une configuration traversante pour lesdits premier et deuxième logements (4, 7 ; 54 ; 84, 85 ; 104, 105).

11. Manivelle de pédale selon la revendication 1, **caractérisée en ce que** ladite base desdits premier et deuxième logements est confinée sur l'intérieur du corps de ladite manivelle de pédale en définissant une configuration aveugle pour lesdits premier et deuxième logements.

12. Manivelle de pédale selon la revendication 10, **caractérisée en ce que** lesdites première et deuxième pièces rapportées métalliques ont une deuxième partie de tête élargie appropriée pour être placée en butée contre ladite deuxième surface extérieure.

13. Manivelle de pédale selon la revendication 1, **caractérisée en ce qu'**elle comprend un élément de recouvrement amovible qui peut être appliqué au-dessus desdites première et deuxième pièces rapportées métalliques.

14. Manivelle de pédale (1 ; 100) selon la revendication 1, **caractérisée en ce que** ledit espacement (15, 16 ; 65 ; 87) a une épaisseur globalement uniforme.

15. Manivelle de pédale (1 ; 100) selon la revendication 14, **caractérisée en ce que** ladite épaisseur se situe entre 0,1 et 0,05 mm.

16. Manivelle de pédale (1 ; 100) selon la revendication 1, **caractérisée en ce que** lesdites fibres structurelles sont disposées de façon aléatoire à l'intérieur de ladite matrice de matériau polymère.

17. Manivelle de pédale selon la revendication 1, **caractérisée en ce que** lesdites fibres structurelles sont placées d'une manière ordonnée dans ladite matrice de matériau polymère.

18. Manivelle de pédale (1 ; 100) selon la revendication 1, **caractérisée en ce que** lesdites fibres structurelles peuvent être choisies à partir du groupe comprenant : des fibres de carbone, des fibres de verre, des fibres aramides, des fibres céramiques ou n'importe quelle combinaison de celles-ci.

19. Manivelle de pédale (1 ; 100) selon la revendication 1, **caractérisée en ce que** lesdites première et deuxième pièces rapportées métalliques (5, 8 ; 55 ; 88, 89 ; 108, 109) sont constituées d'un alliage léger.

20. Manivelle de pédale (1 ; 100) selon la revendication 19, **caractérisée en ce que** ledit alliage léger est l'aluminium.

21. Manivelle de pédale (1 ; 100) selon la revendication 1, **caractérisée en ce que** ladite substance collante est constituée d'une résine époxy bi-composant.

22. Manivelle de pédale (100) selon la revendication 1, **caractérisée en ce que** ladite manivelle de pédale (1) comprend un troisième logement (115) et une troisième pièce rapportée (110) pour l'ancrage d'une couronne associée à ladite manivelle de pédale (1).

23. Manivelle de pédale (100) selon la revendication 22, **caractérisée en ce que** ladite troisième pièce rapportée (110) est disposée à une position intermédiaire entre ladite première pièce rapportée (108) et ladite deuxième pièce rapportée (109).

24. Manivelle de pédale (100) selon la revendication 1, **caractérisée en ce que** ladite manivelle de pédale (1) comprend un ou plusieurs bras (113) qui s'étendent radialement par rapport audit premier logement (104) appropriés pour permettre l'ancrage d'une couronne associée à ladite manivelle de pédale (1).

25. Manivelle de pédale (100) selon la revendication 24, **caractérisée en ce que** lesdits bras (113) comprennent des logements (112) et des pièces rapportées pour l'ancrage de ladite couronne.
